Europäisches Patentamt

European Patent Office

Office européen des brevets

(19)

(11) Veröffentlichungsnummer: **0 316 557**
**A2**

(12) **EUROPÄISCHE PATENTANMELDUNG**

(21) Anmeldenummer: 88116364.6

(22) Anmeldetag: 04.10.88

(51) Int. Cl.⁴: **C09J 3/00 , C09J 7/00 ,**
**//C09J5/06**

(30) Priorität: 16.11.87 DE 3738878
01.02.88 DE 3802881

(43) Veröffentlichungstag der Anmeldung:
24.05.89 Patentblatt 89/21

(84) Benannte Vertragsstaaten:
AT BE CH DE ES FR GB IT LI NL SE

(71) Anmelder: UZIN-Werk Georg Utz GmbH &
Co.KG
Dieselstrasse 3
D-7900 Ulm(DE)

(72) Erfinder: Hellmann, Horst-D., Dipl.-Ing.
Brunnenweg 2
D-8871 Reisensburg(DE)
Erfinder: Krieger, Roland, Dr.
Beim Tannenhof 96
D-7900 Ulm(DE)

(74) Vertreter: Reinhard, Skuhra, Weise
Leopoldstrasse 51
D-8000 München 40(DE)

(54) **Mikrowellenaktivierbarer Schmelzklebstoff.**

(57) Ein Schmelzklebstoff mit wenigstens einem Bestandteil, der bei Einwirkung von Mikrowellen auf den trocknen Schmelzklebstoff zu einer erhöhten Aufheizrate gegenüber einem entsprechenden trocknen Schmelzklebstoff ohne diesen Bestandteil und dadurch zu einer höheren Aufschmelzgeschwindigkeit führt, weist im Hinblick auf einen universellen Einsatz mit möglichst hoher Aktivierbarkeit und gleichbleibender Eigenschaftscharakteristik als mikrowellenaktivierbaren Bestandteil elektrisch leitfähige Substanzen auf, deren elektrische Leitfähigkeit über der des trocknen Schmelzklebstoffs ohne diesen Bestandteil liegt. Als elektrisch leitfähige Substanzen sind insbesondere Kohlenstoffasern, Ruß, Graphit, Antistatika und Metallpartikel, entweder allein oder in anwendungsspezifischen Mischungen vorgesehen. Schmelzklebstoffaufträge oder selbsttragende Schmelzklebstoffolien mit diesen Zusätzen weisen eine bis zum Faktor 400 erhöhte Aufheizbarkeit durch Mikrowellen gegenüber herkömmlichen mikrowellenaktivierbaren Klebstoffen auf. Hierdurch ergibt sich eine deutliche Verringerung des Bedarfs an elektrischer Energie bei Klebungen durch Mikrowellenaktivierung bzw. eine entsprechende Erhöhung der Verlegeleistung von zu verklebendem Material. Der neue Schmelzklebstoff eignet sich vorzugsweise zur mikrowellenaktivierten Schmelzklebung von flächigen Substraten, insbesondere von Bodenbelägen, und ermöglicht durch die weitgehende Abkopplung der Aktivierbarkeit vom Wassergehalt üblicher Klebstoffe gleichzeitig die für industrielle Anwendungen und Fertigungen erforderliche Gleichmäßigkeit und Reproduzierbarkeit des Aktivierungs- und Aufschmelzverhaltens.

EP 0 316 557 A2

## Mikrowellenaktivierbarer Schmelzklebstoff

Die Erfindung betrifft einen Schmelzklebstoff sowie Verfahren zur Herstellung eines Schmelzklebstoffauftrags und einer selbsttragenden Schmelzklebstoffolie.

Bezweckt wird die Schaffung eines mikrowellenaktivierbaren Schmelzklebstoffs, der sich zum Verkleben von Flächengebilden, vorzugsweise zum Verkleben von Boden- und Wandbelägen eignet.

Aus der DE-OS 33 07 502 ist es bekannt, Bodenbeläge durch Mikrowellenaktivierung eines rückseitig aufgetragenen Schmelz-Klebstoffs zu verkleben. Der mikrowellenaktivierbare Schmelzklebstoff selbst wird dort allerdings nicht näher beschrieben, sondern nur als in bevorzugter Ausführungsform als "wassermolekülhaltiger Heißsiegelkleber" charakterisiert.

Die Aktivierbarkeit eines derartigen wassermolekülhaltigen Schmelzklebstoffs durch Mikrowellen beruht im wesentlichen auf der relativ hohen Dielektrizitätskonstanten des Wassermoleküls. Die Aufschmelzgeschwindigkeit eines solchen Schmelzklebstoffs hängt damit von der Menge des in der trockenen Schmelzklebstoffschicht zurückgehaltenen Restwassers ab.

Als nachteilig ist bei diesen über den Wassergehalt mikrowellenaktivierbaren Schmelzklebstoffen zu sehen, daß so hohe Wasserrestanteile, wie sie zur Einhaltung einer akzeptablen Aufschmelzgeschwindigkeit erforderlich sind, nur mit hohen Anteilen stark hygroskopischer, wasserrückhaltender Zusatzmittel in der Klebstoffschicht gebunden werden können. Diese relativ hohen Mengen hygroskopischer Zusatzmitteln verbleiben auch nach vollzogener Klebung im Klebstoff und verschlechtern die Wasserbeständigkeit der Klebeverbindung insofern, als bei Feuchtigkeitseinwirkung die Festigkeit der Klebefuge bis zum völligen Versagen zurückgehen kann.

Als nachteilig muß ferner empfunden werden, daß das für die Aktivierbarkeit entscheidende Wasser in der Schmelzklebstoffschicht nur physikalisch eingelagert ist und damit im Gleichgewicht mit der Umgebungsfeuchtigkeit steht. Bei einer Veränderung der Gleichgewichtsparameter, z. B. der Temperatur und/oder der Luftfeuchtigkeit, verändert sich auch der Wasseranteil in der Schmelzklebstoffschicht, so daß eine gleichbleibende Aktivierbarkeit durch Mikrowellen in keiner Weise gewährleistet ist.

In der DE-OS 35 45 600 ist eine Verlegeunterlage auf Vlies-oder Gewebebasis als Träger mit einer mikrowellenaktivierbaren Schmelzklebstoffbeschichtung offenbart. Für derartige Schmelzklebstoffe werden vinylacetathaltige Copolymerisate sowie Copolymerisate aus der Gruppe Vinyllaurat, Vinylchlorid, Vinylidenchlorid, Ethylen, Propylen, Butylen, Isopren, Styrol, Maleinsäure und deren Ester und Anhydride als Basis verwendet. Als besonders bevorzugte Schmelzklebstoffbasis werden spezielle Vinylacetat-Maleinat-Copolymerisate, Vinylacetat-Ethylen-Copolymerisate und Vinylacetat-Acrylester-Copolymerisate genannt, die als ca. 50%ige wäßrige Dispersionen im Handel sind und direkt für den Einsatz als mikrowellenaktivierbarer Schmelzklebstoff verwendet werden können. Entsprechend der üblichen Herstellungsmethode enthalten diese Dispersionen anionische oder nichtionische Netzmittel sowie Polyvinylalkohole oder Celluloseester als Schutzkolloide.

Bei den zuletzt genannten Stoffen Polyvinylalkohol bzw. Celluloseestern wie Methylcellulose, Hydroxyethylcellulose usw. handelt es sich um ausgesprochene hydrophile, wasserrückhaltende Schutzkolloide, die, wie schon weiter oben beschrieben, eine erhöhte Gleichgewichtsfeuchtigkeit in dem aus der Dispersion durch Trocknung erhaltenen Kunststoffauftrag bewirken. Auf dieser gegenüber schutzkolloidfreien Dispersionen deutlich erhöhten Gleichgewichtsfeuchtigkeit beruht überwiegend die gute Mikrowellenaktivierbarkeit der genannten Copolymerisate.

Des weiteren wird in einer besonderen Ausführungsform der Auftrag des mikrowellenaktivierbaren Schmelzklebstoffs auf eine Vorbeschichtung beschrieben, die aus Polyvinylalkohol, verkleisterter bzw. abgebauter Stärke oder wasserlöslichen Cellulosederivaten bestehen kann. Dabei wird u. a. auf den dadurch erhöhten Feuchtigkeitsgehalt des Schmelzklebstoffauftrags hingewiesen, der die Aktivierbarkeit durch Mikrowellen fördert.

Bei den in der DE-OS 35 45 600 geanannten Copolymerisat-Typen handelt es sich um marktübliche, bekanntermaßen gut aufschmelzbare Thermoplaste, die bereits seit vielen Jahren als Rohstoffe für Heißschmelz- bzw. Heißsiegeilklebstoffe verwendet werden. Der Mechanismus des Aufheizens durch Mikrowellenaktivierung beruht aber auch hier im wesentlichen auf dem relativ hohen Anteil des von den Schutzkolloiden in dem Schmelzklebstoffauftrag physikalisch gebundenen Wassers. Die diskutierten Nachteile einer durch den Wassergehalt bewirkten Mikrowellenaktivierbarkeit gelten demgemäß auch für diese Schmelzklebstoffe. Hinzu kommt, daß die Mikrowellenaktivierung der vorbekannten Schmelzklebstoffe einen relativ großen Energieaufwand erfordert, der die Wirtschaftlichkeit der Anwendung beeinträchtigt.

Der Erfindung liegt die Aufgabe zugrunde, einen universell einsetzbaren mikrowellenaktivierbaren Schmelzklebstoff mit möglichst hoher Aktivierbarkeit und gleichbleibender Eigenschaftscharakteristik verfügbar zu machen.

Erfindungsgemäß wird diese Aufgabe durch die im Patentanspruch 1 gekennzeichneten Merkmale gelöst. Bevorzugte Merkmale, die die Erfindung vorteilhaft weiterbilden, sind den nachgeordneten Patentansprüchen zu entnehmen.

In Abkehr von der in der Fachwelt vorherrschenden Verwendung von mikrowellenaktivierbaren Schmelzklebstoffen, bei denen die Mikrowellenaktivierbarkeit vor allem durch eingelagerte Wasseranteile herbeigeführt wird, wurde für den beanspruchten Schmelzklebstoff in überraschender Weise. festgestellt, daß die Mitverwendung elektrisch leitfähiger Substanzen nicht nur zu Schmelzklebstoffen mit sehr gut reproduzierbarer, gleichbleibender und von klimatischen Schwankungen weitgehend unbeeinflußter hoher Aktivierbarkeit führt, sondern daß dadurch, verglichen mit vorbekannten mikrowellenaktivierbaren Schmelzklebstoffen, bei gleichem Energieaufwand wesentlich höhere Aufheizraten und entsprechend höhere Aufschmelzgeschwindigkeiten erreicht werden.

Die Aufheizgeschwindigkeit des erfindungsgemäßen Schmelzklebstoffs liegt gegenüber den bisher bekannten mikrowellenaktivier baren Klebstoffen bis um den Faktor 400 größer. Diese bemerkenswerte Erhöhung ist z.B. für die Verlegung von Bodenbelägen von ausschlaggebender Bedeutung, da sie nicht nur eine erheblich höhere Verlegeleistung, sondern auch eine wesentliche Verbesserung der Verlegequalität ermöglicht.

Dem hohen technischen Aufwand bei der Herstellung von Klebeverbindungen durch Mikrowellenaktivierung müssen qualitativ hochwertige, kostenoptimierte und reproduzierbare Arbeitsergebnisse gegenüberstehen. Der erfindungsgemäße Schmelzklebstoff kommt vorteilhaft diesen Anforderungen in besonders hohem Maße entgegen.

Nach einer bevorzugten Ausgestaltung weist der Schmelzklebstoff ein oder mehrere thermoplastische, ggf. in an sich bekannter Weise mit Kunst- und/oder Naturharzen und/oder Additiven modifizierte Polymere als Bindemittel auf und bildet nach dem Auftragen auf ein zu verklebendes Material einen nach dem Trocknen bzw. Erhärten bzw. Abbinden trockenen und bei Raumtemperatur nur schwachklebenden bis klebfreien Klebstoffauftrag.

Die vorteilhafte Ausgestaltung des Schmelzklebstoffs als mikrowellenaktivierbarer Klebstoffauftrag läßt sich beispielsweise günstig für das Verlegen von Bodenbelägen einsetzen, wobei die mit mikrowellenaktivierbaren Schmelzklebstoff versehene Materialrückseite auf den Untergrund aufgelegt wird. Innerhalb eines bestimmten Zeitintervalls wird nun ein Mikrowellengenerator unter gleichzeitiger Ausübung eines bestimmten Anpressdruckes oberseitig über das Material geführt, so daß sich daraus eine bestimme Energieeinstrahlung pro Zeiteinheit pro Flächeneinheit ergibt. Die verbesserte Aktivierbarkeit des Schmelzklebstoffauftrags wird dabei in verschiedener Hinsicht zu äußerst vorteilhaften Möglichkeiten, nämlich alternativ zu einer größeren geklebten Fläche pro Zeiteinheit, zu einem geringeren Zeitaufwand pro Flächeneinheit, zu einem geringeren Energieaufwand pro Flächeneinheit, oder zu einer höheren Schmelztemperatur und dadurch zu einer besseren Benetzung.

Nach einer alternativen bevorzugten Ausgestaltung weist der Schmelzklebstoff ein oder mehrer thermoplastische, ggf. in an sich bekannter Weise mit Kunst- und/oder Naturharzen und/oder Additiven modifizierte Polymere als Bindemittelbasis auf und ist nach dem Trocknen bzw. Erhärten bzw. Abbinden als selbsttragende Folie ausgebildet.

Bei der Ausgestaltung des mikrowellenaktivierbaren Schmelzklebstoffs als selbsttragende Folie bildet der Schmelzklebstoff selbst ohne eine Trägerschicht nach dem Trocknen bzw. Erhärten bzw. Abbinden unmittelbar eine Folie, die unabhängig von einer vorherigen Zuordnung zu einem zu verklebenden Material verwendet werden kann. Die Folie läßt sich universell für alle Anwendungsfälle einsetzen, bei denen eine Verklebung mit Mikrowellenaktivierung durchgeführt werden kann. Sie ermöglicht eine besonders einfache Handhabung und eine ideale Anpassung an die jeweils gewünschten Klebebedingungen, beispielsweise durch nur punktuelles oder randseitiges Verkleben einer Belagsfläche oder durch Verwendung mehrerer geschichteter Folien bei Anwendungsfällen mit hohem Klebstoffbedarf.

Nach einer weiteren Ausgestaltung der Erfindung weist die Schmelzklebstoffolie Ausnehmungen bzw. Löcher auf, um die Menge des eingesetzten Schmelzklebstoffes aus wirtschaftlichen Gründen zu begrenzen. Die Ausnehmungen können beispielsweise durch Perforation, Stanzen oder dergl. hergestellt sein.

Die Schmelzklebstoffolie ist vorzugsweise klebfrei bis schwach klebend. Bei schwachklebender Ausbildung bietet eine Abdeckung aus Dehäsivpapier einen wirksame: Verklebungsschutz vor der eigentlichen Verklebung. Nach Entfernen des Dehäsivpapiers kann eine schwachklebende Folie vorteilhaft vor der eigentlichen Mikrowellenaktivierung fixiert werden.

Die Dicke der Schmelzklebstoffolie beträgt bis zu 5 mm, vorzugsweise 0,5 - 2,5 mm, und die Schmelzklebstoffolie ist bevorzugt bahnförmig mit einer Breite bis zu 3 m ausgebildet.

Als elektrisch Leitfähige Substanz wird erfindungsgemäß bevorzugt Kohlenstoff in Form von Kohlenstoffasern, Graphiten, Rußen oder Rußpigmenten verwendet. Kohlenstoff ist in den verschiedenen Formen leicht und vielfältig verfügbar und verhält sich chemisch weitgehend inert.

Besonders gute Aufheizraten mit bis weit über 100-facher Geschwindigkeit gegenüber der reinen Bindemittelbasis werden mit Kohlenstoffasern erzielt. Die Länge der verwendeten Fasern spielt dabei für die Aktivierung keine entscheidende Rolle; aus Gründen der besseren Verarbeitbarkeit des flüssigen Klebstoffs liegt die mittlere Faserlänge jedoch in einem Bereich bis 50 mm, bevorzugt im Bereich 0,1 - 5 mm.

Der Mengenanteil der Kohlenstoffasern liegt vorzugsweise zwischen 0,5 - 30 Gew.% und in einer bevorzugten Ausführungsform zwischen 2,0 - 16 Gew.%, jeweils bezogen auf die trockene Schmelzklebstoffmasse. Die Aufheizrate steigt mit der eingesetzten Fasermenge, die nach oben eigentlich nur von den Materialkosten sowie von der noch erforderlichen Verarbeitbarkeit des Schmelzklebstoffs begrenzt wird.

Als wichtigster Vorteil bei der Verwendung von Kohlenstoffasern ist neben der stark erhöhten Aufheizrate zu werten, daß die klebtechnischen Eigenschaften des Schmelzklebstoffs im Vergleich zu allen anderen bekannten oder erfindungsgemäß aktivierungsfördernden Zusatzmitteln am wenigsten verändert oder beeinträchtigt werden.

Bei einer alternativen Ausführungsform der erfindungsgemäßen Schmelzklebstoffe werden als elektrisch leitfähige Substanz Ruße oder Rußpigmente verwendet. Auch Ruße oder Rußpigmente führen zu einer deutlichen, wenn auch gegenüber der Wirkung von Kohlenstoffasern weniger ausgeprägten Erhöhung der Aufheizrate durch Mikrowellen. Der günstigste Mengenanteil dieser Substanzen liegt dabei im Bereich zwischen 0,5 - 20 Gew.%, vorzugsweise im Bereich zwischen 2 - 12 Gew.%, jeweils bezogen auf die trockene Schmelzklebstoffmasse.

Bei der Verwendung von Ruß oder Rußpigmenten hängt die mögliche Einsatzmenge wesentlich von der Teilchengröße ab. Je gröber die Teilchen sind, desto höher kann die Einsatzmenge gewählt werden. Feinteilige Ruße vermindern die Benetzungseigenschaften des aufgeschmolzenen Schmelzklebstoffs und müssen deshalb niedriger dosiert werden.

In einer weiteren alternativen Ausführungsform der erfindungsgemäßen Schmelzklebstoffe werden als elektrisch leitfähige Substanzen Graphite verwendet. Graphite führen zu einer den Rußen vergleichbaren Erhöhung der Aufheizrate, liegen in ihrer Wirkung also ebenfalls unten den Kohlenstoffasern, jedoch deutlich über herkömmlichen mikrowellenaktivierbdren Schmelzklebstoffen.

Wie bei Rußen kann eine zu hohe Dosierung sehr feinteiligen Graphits zu einer Verminderung der Benetzungseigenschaften des aufgeschmolzenen Schmelzklebstoffs führen. Praktikable Mengenanteiße Graphit liegen im Bereich zwischen 2 - 40 Gew.%, vorzugsweise im Bereich zwischen 4 - 30 Gew.% und besonders bevorzugt im Bereich zwischen 10 - 20 Gew.%, jeweils bezogen auf trockene Schmelzklebstoffmasse.

Als weitere Alternative können als elektrisch leitfähige Substanz Metallpartikeln in Form von Pulver, Flocken, Körnern, Blättchen, Fasern o.a. verwendet werden. Als Metalle kommen aus praktischen Erwägungen vor allem Aluminium und Kupfer in Frage. Grundsätzlich ist jedoch der Effekt einer Erhöhung der Aufheizrate auch mit anderen Metallen erreichbar. Der Mengenanteil an Metallpartikeln kann je nach Dichte des Metalls im Bereich zwischen 1 - 70 Gew.%, vorzugsweise zwischen 10 - 40 Gew.%, bezogen auf die trockene Schmelzklebstoffmenge, liegen. Bezüglich der Partikelgröße gilt sinngemäß das schon bei Graphit Gesagte.

Als Weitere Alternative können als elektrisch leitfähige Substanz Antistatika in einem Mengenanteil zwischen 0,5- 20 Gew.%, vorzugsweise 2 - 10 Gew.% und besonders bevorzugt zwischen 4- 8 Gew.%, bezogen auf die trockene Schmelzklebstoffmasse, verwendet werden. Die Einsatzmenge ist nach oben nur durch die Verträglichkeit einzelner Antistatika im Schmelzklebstoffsystem begrenzt. Als Antistatika kommen grundsätzlich alle jenen Substanzen in Frage, die aufgrund ihrer speziellen Elektronen- oder Ladungsverteilung zur Ab- und/oder Weiterleitung elektrischer Ladungen geeignet sind, speziell chemische Erzeugnisse, die zur Herbeiführung antistatischer Eigenschaften auf dem Markt angeboten werden.

Nach einer weiteren vorteilhaften Ausführungsform der Erfindung wird als elektrisch leitfähige Substanz ein Gemisch aus einer oder mehreren der Substanzen Kohlenstoffasern, Ruß oder Rußpigmente, Graphit, Metallpartikel und Antistatika verwendet. Durch die entsprechende Wahl der Mischungsbestandteile und jeweiligen Mengenanteile besteht in besonders vorteilhafter Weise. die Möglichkeit, ein optimales, den jeweiligen Einsatzbedingungen angepaßtes Verhältnis zwischen der Aufheizrate und den Klebstoffeigenschaften herzustellen.

In einer Weiterbildung der erfindungsgemäßen Schmelzklebstoffe werden als Modifizierungsmittel aminogruppenhaltige Verbindungen, sog. Amine, in einem Mengenanteil bis zu 20 Gew.%, bezogen auf die trockene Schmelzklebstoffmasse, mitverwendet. Besonders bevorzugt werden organische primäre, sekundäre, tertiäre und quarternäre Amine und Polyamine. Durch die Mitverwendung von Aminen kann eine

4

wesentliche Steigerung der Aufheizrate des Schmelzklebstoffs erreicht werden.

Anstelle von oder zusammen mit Aminen können nach einer weiteren Ausgestaltung der Erfindung als Modifizierungsmittel ethergruppenhaltige Verbindungen in einem Mengenanteil bis zu 40 Gew.%, bezogen auf Festsubstanz, mitverwendet werden. Besonders bevorzugt werden Polyether, z.B. Polyethylenglycole und Polypropylenglycole sowie deren Derivate, und Polyvinylether. Ebenso wie Amine führen auch Ether zu einer Steigerung der Aufheizrate des Schmelzklebstoffs.

Als Bindemittel für den erfindungsgemäßen Schmelzklebstoff werden thermoplastische Polymere bzw. Kunststoffe oder Kunstharze verwendet. Bevorzugt werden Thermoplaste mit einem engen Schmelzbereich zwischen 60 - 120 °C und möglichst niedriger Schmelzviskosität, um eine gute Benetzungsfähigkeit im Schmelzzustand zu erreichen. Durch den Zusatz geeigneter Harze und/oder Wachse wie z.B. Kohlenwasserstoffharze, Kolophoniumharzester, Cumanron-Inden-Harze, Polyterpenharze, Paraffinwachse, Mikrowachse usw. kann die Schmelzcharakteristik nach aus dem Bereich der Schmelzklebstoffe bekanntem Stand der Technik eingestellt bzw. modifiziert werden. Gleichzeitig verbessern Harzzusätze die klebetechnischen Eigenschaften.

Als Beispiele für besonders gut geeignete und daher bevorzugte thermoplastische polymere Bindemittel sind zu nennen Vinylacetat-Copolymerisate mit einem oder mehreren der Co-Reaktanden Vinylchorid, Vinylidenchlorid, Vinyllaurat, Vinylversatat, Acrylsäureester, Maleinsäureester, Maleinsäureanhydrid, Ethylen, Butadien, Isopren, Styrol u.a.. Die genannten Thermoplaste können als Festharze oder aber in Form flüssiger Dispersionen in Wasser mit 50 - 65 % Festgehalt verwendet werden.

Als weitere Beispiele für besonders gut geeignete und daher bevorzugte thermoplastische polymere Bindemittel sind zu nennen EVA, PA, PES, EEA, PVB oder PIB, wobei diese Bindemittel ggf. auch in Form von Lösung oder Dispersion verwendet werden können.

Den erfindungsgemäßen Schmelzklebstoffen können handelsübliche Additive, z.B. Entschäumer, Verdicker, Netzmittel, Konservierungsmittel, Stabilisatoren, Farbstoffe usw. sowie Füllstoffe, z.B. Quarzsand, Quarzmehl, Kreide, Steinmehl, Kaolin, Leichtspat usw. zugefügt sein. Die Art und Zusatzmenge von Additiven und Füllstoffen richtet sich weitgehend nach dem allgemeinen Kenntnisstand der Klebstofftechnik, so wie sie auch dem Durchschnittsfachmann auf diesem Gebiet geläufig ist.

In einer besonderen Weiterbildung der Erfindung werden spezielle mineralische Füllstoffe verwendet, deren Teilchen als Hohlkörper ausgebildet und in der Regel sphärisch geformt sind. Deratige Hohlkörperfüllstoffe sind an sich auch zur Anwendung in Klebstoffen bekannt. Diese spezifisch sehr leichten Füllstoffe führen im Vergleich zu konventionellen Füllstoffen zu spezifisch relativ leichten Schmelzklebstoffen, die bei geringer Masse ein sehr gutes Füllvermögen aufweisen. Bei gleichem Auftragsgewicht ergeben sich dadurch höhere Schichtdicken, die nach dem Aufschmelzen zu einer besseren Benetzung des Untergrunds führen. Außerdem stellen derartige Hohlkörperfüllstoffe im Gegensatz zu kompakten Füllstoffen schlechte Wärmeleiter dar, so daß die durch Mikrowelleneinwirkung im Schmelzklebstoff induzierte Wärmemenge langsamer an die Umgebung abgeführt wird und damit für den Schmelz- und Benetzungsvorgang länger zur Verfügung steht.

Zur Herstellung eines mikrowellenaktivierbaren, bei Raumtemperatur klebfreien Schmelzklebstoffauftrags auf das zu verklebende Substrat bzw. zur Herstellung einer selbsttragenden Schmelzklebstofffolie ist es zuvor erforderlich, den Schmelzklebstoff nach einem der aus der Beschichtungstechnik bekannten Auftragsverfahren in flüssiger Form auf dieses Substrat bzw. im Fall der Folienherstellung auf einen Zwischenträger aufzutragen und anschließend verfestigen zu lassen. Nach dem Trocknen bzw. Erhärten bzw. Abbinden wird im Fall der Herstellung einer selbst tragenden Schmelzklebstofffolie diese vom Zwischenträger gelöst. Als Auftragsverfahren kommen in der Regel Streichen, Walzen, Spritzen, Aufsprühen oder Gießen einschließlich den entsprechenden Variationen wie Umkehrbeschichtung, Umkehrwalzen usw. in Frage. Diese Verfahren setzen eine flüssige bis pastöse Auftragskonsistenz des Klebstoffs voraus.

Eine besondere Weiterbildung der Erfindung betrifft die Art der Herbeiführung dieser für den jeweiligen Schmelzklebstoffauftrag erforderlichen flüssigen Konsistenz. Dazu werden grundsätzlich drei Möglichkeiten vorgeschlagen.

Nach dem ersten Verfahren werden die erforderlichen Klebstoffbestandteile in organischen Lösungsmitteln gelöst bzw., soweit unlöslich, dispergiert bzw. suspendiert. Die Verfestigung des Schmeßzklebstoffs erfolgt durch Verflüchtigung der Lösungsmittel, also durch physikalische Trocknung. Durch Erhöhung bzw. Erniedrigung des Lösungsmittelanteils kann eine dem Auftragsverfahren angepaßte flüssige Koinsistenz des Schmelzklebstoffs eingestellt werden. Als Lösungsmittel bevorzugt verwendet werden niedrige Alkohole, Ester, Ketone und Aliphaten soiwe Gemische daraus. Vorteil dieser Methode ist die rasche Trocknung des Schmelzklebstofffilms, wobei allerdings eine zunehmend strengere Gesetzgebung die technisch aufwendige Entfernung der Lösungsmitteldämpfe aus der Abluft erforderlich macht.

Nach den zweiten Verfahren werden die erforderlichen Schmelzklebstoffbestandteile in Wasser gelöst

5

bzw. dispergiert bzw. suspendiert. Vorzugsweise wird dabei das thermoplastische Schmelzklebstoffbindemittel von vornherein in Form einer wäßrigen Dispersion verwendet, der die weiteren Schmelzklebstoffkomponenten dann in geeigneter und an sich bekannter Weise beigemischt werden. Der nach dieser Methode resultierende Dispersionsschmelzklebstoff kann zur Verbesserung der Verarbeitungseigenschaften geringe Lösungsmittelanteile enthalten. Vorteil dieser Methode ist die weitgehende Ungefährlichkeit der Dispersionsschmelzklebstoffe. Die Verfestigung dieser Dispersionsschmelzklebstoffe erfolgt ebenfalls durch physikalische Trocknung.

Nach dem dritten Verfahren werden zur Zubereitung des Schmelzklebstoffs keine flüssigen Trägermedien wie Lösungsmittel oder Wasser verwendet; der Klebstoff wird vielmehr als Hotmelt-bzw. Heißschmelzklebstoff formuliert, der ab einer bestimmten Temperatur und Wärmezufuhr schmilzt und in schmelzflüssiger Form aufgetragen wird. Die Verfestigung erfolgt in diesem Fall nicht durch Trocknung, sondern durch Erstarrung beim Abkühlen.

Nach den beiden erstgenannten Verfahren erfolgt die Verfestigung des frisch aufgetragenen Schmelzklebstoffs durch sphysikalische Trocknung. Das setzt voraus, daß der Schmelzklebstoff in Schichtdicken aufgetragen wird, aus denen innerhalb akzeptabler Trockenzeiten die flüchtigen Bestandteile mit den zur Verfügung stehenden Trocknungsaggregaten soweit entfernt werden können, daß die beschichtete Ware bzw. die hergestellte Schmelzklebstoffolie klebfrei gestapelt, aufgerollt oder anderweitig weiterbearbeitet werden kann. Nicht in jedem Fall wird es dabei in wirtschaftlich rentabler Weise möglich sein, Schmelzklebstoffschichten in der für eine ausreichende Benetzungsfähigkeit erforderlichen Schichtdicke herzustellen.

Beim Auftrag als Schmelzklebstoff ist es dagegen technisch einfach realisierbar, den Schmelzklebstoff nicht nur in beliebig dicken Schichten, sondern auch in Form von Punkten, Streifen, Riefen und ähnlichem aufzutragen. Der Auftrag in Form von erhöhten Riefen, so wie er z.B. auch beim manuellen Klebstoffauftrag mit gezahnten Spachteln erreicht wird, hat gegenüber der vollflächigen Beschichtung den Vorteil, daß bei der späteren Mikrowellenapplikation bei gleichem Verbrach eine erheblich bessere Benetzung des Untergrundes erreicht werden kann.

Die Eigenart der Verklebung durch Mikrowellenaktivierung macht es insbesondere beim Legen von Bodenbelägen auf den unterschiedlich rauhen Untergründen erforderlich, daß pro Flächeneinheit ein möglichst hohes, zum guten Füllen und Benetzen des Untergrundes ausreichendes Schmelzklebstoffvolumen zur Verfügung steht. In der Energiebilanz des Aufschmelzvorganges dagegen ist es von Vorteil, wenn möglichst wenig Schmelzklebstoffmasse erhitzt werden muß und wenn Verluste durch Wärmeabfluß möglichst gering gehalten werden. Klebstoffe mit geringer Dichte kommen diesen Anforderungen entgegen, wie schon bei der Ausführungsform mit Hohlkörperfüllstoffen ausgeführt worden ist.

Eine weitere vorteilhafte Ausführungsform der erfindungsgemäßen Schmelzklebstoffe besteht nun darin, daß die Verringerung der Dichte der Schmelzklebstoffschicht bzw. der Schmelzklebstoffolie dadurch herbeigeführt·wird, daß der Schmelzklebstoff in geschäumter Form vorliegt. Das kann erreicht werden, indem der Schmelzklebstoff vor oder während des Auftrags aufgeschäumt und in dieser Form dann verfestigt wird. Es ist aber auch möglich, der Schmelzklebstoffzubereitung ein chemishes Treibmittel zuzufügen, das erst während oder nach dem Auftrag des Schmelzklebstoffs zum Aufschäumen führt. Entsprechende Verfahren zur Herstellung mechanisch oder chemisch geschäumter Beschichtungen sind in der Beschichtungstechnik bekannt. In geschäumter Form können also voluminöse bei der Mikrowellenverklebung gut benetzende Klebstoffschichten bzw. selbsttragende Schmelzklebstoffolien hergestellt werden, ohne daß dazu das Auftragsgewicht des Schmelzklebstoffs erhöht werden müßte.

Nachfolgend wird über die Ergebnisse vergleichender Versuche berichtet, bei denen ein geeigneter thermoplastischer Polymerfilm allein und in Abmischung mit verschiedenen Zusatzstoffen mittels Mikrowellen bis zur Schmelze erhitzt wurde. Die Versuchsergebnisse gelten sowohl für die Ausbildung des Schmelzklebstoffs als Schmelzklebstoffauftrag auf ein zu verklebendes Material als auch für die Ausbildung als selbsttragende Schmelzklebstoffolie. Die bis zum Eintritt der Schmelze aufgebrachte Energie wurde aus dem Produkt der Leistungsabgabe des Mikrowellengenerators und der Expositonszeit bestimmt und für den reinen, nicht modifizierten thermoplasten als 1 gesetzt. Der für den modifizierten Thermoplastfilm ermittelte Energieaufwand, dievidiert durch den Energieaufwand für den reinen Thermoplasten ergibt danach eine als "Aufheizverbesserungsfaktor" bezeichnete dimensionslose Größe, die ausdrückt, um wievielmal besser oder schneller der modifizierte Thermoplast aufschmelzbar ist wie der unmodifizierte Thermoplast.

Auf einer mikrowelleninaktiven Polyethylenfolie wurden jeweils 7 g der 50%igen wäßrigen Dispersion eines typischen Heißsiegelthermoplasten (TP1 bzw. TP2) unmodifiziert und modifiziert in einer Naßschichtdicke von 0,5 mm aufgetragen und 24 Std. bei 50 °C getrocknet. Die trockenen Filme wurden daraufhin unter sonst gleichen Bedingungen durch Mikrowellen zum Schmelzen .gebracht und die eingestrahlte Energie wie oben ermittelt.

6

| TP 1 = Vinylacetat-Ethylen-Copolymer | (Vinnapas EP 1) |
| TP 2 = Vinylacetat-Vinylversatat-Copolymer | (Versuchsprodukt) |

Tabelle 1

| Versuchsmischung (Gew.%) | Aufheizverbesserungsfaktor |
|---|---|
| TP1 unmodifiziert | 1,0 |
| TP1 + 4% Polyvinylalkohol | 0,9 |
| TP1 + 4% Cellulosemethylether | 1,2 |
| TP1 + 4% Graphit | 3,3 |
| TP1 + 4% Antistatikum | 6,5 |
| TP1 + 4% Ruß | 8,7 |
| TP1 + 4 % Kohlenstoffasern | 65,0 |

Tabelle 2

| Versuchsmischung (Gew.%) | Aufheizverbesserungsfaktor |
|---|---|
| TP2 unmodifiziert | 1,0 |
| TP2 + 4% Kohlenstoffasern | 100,0 |
| TP2 + 8% Kohlenstoffasern | 389,0 |
| TP2 + 3% Ruß | 10,0 |
| TP2 + 7% Ruß | 14,0 |
| TP2 + 6% Graphit | 3,0 |
| TP2 + 12% Graphit | 18,0 |
| TP2 + 3% Antistatikum | 10,0 |
| TP2 + 7% Antistatikum | 23,0 |

Die Versuchsergebnisse zeigen deutlich die ungewöhnlich hohe Anhebung des Aufheizverbesserungsfaktors durch Kohlenstoffasern und die immerhin noch beachtlichen Aufheizverbesserungsfaktoren der übrigen erfindungsgemäßen Substanzen. Klar zu erkennen ist auch, daß der Zusatz hydrophiler Schutzkolloide wie Polyvinylalkohol oder Celluloseether allein zu keiner nennenswerten Verbesserung führt.

Nachfolgend werden einige Rezepturbeispiele für den erfindungsgemäßen Schmelzklebstoff angegeben:

Rezepturbeispiel 1:

Beispiel einer Klebstoffzusammensetzung mit dem sehr hohen Aufheizverbesserungsfaktor 395.

| Vinylacetat-Vinylversatat-Copolymerdispersion 50%ig | 72,7 Gew.% |
| Kohlenstoffasern | 8,0 Gew.% |
| Harzdispersion | 15,0 Gew.% |
| Entschäumer | 0,3 Gew.% |
| Verdickungsmittel | 0,4 Gew.% |
| Netzmittel | 0,4 Gew.% |
| Füllstoff | 3,2 Gew.% |

Der Ersatz der erfindungsgemäß verwendeten Kohlenstoffasern durch eine gleiche Menge Polyvinylalkohol führt in diesem Fall nur zu einem Aufheizverbesserungsfaktor von 1,6:

Rezepturbeispiel 2:

Beispiel einer relativ kostengünstigen Klebstoffzusammensetzung mit dem hohen Aufheizverbesserungsfaktor 135.

| | |
|---|---|
| Vinalacetat-Vinylversatat-Copolymerdispersion 50%ig | 50,7 Gew.% |
| Kohlenstoffasern | 2,0 Gew.% |
| Graphit | 6,0 Gew.% |
| Harzdispersion | 7,0 Gew.% |
| Harzlösung | 8,0 Gew.% |
| Entschäumer | 0,3 Gew.% |
| Verdickungsmittel | 0,4 Gew.% |
| Netzmittel | 0,4 Gew.% |
| Füllstoff | 25,2 Gew.% |

Rezepturbeispiel 3:

Beispiel einer Klebstoffzusammensetzung mit relativ niedriger Dichte und dem Aufheizverbesserungsfaktor 153.

| | |
|---|---|
| Vinylacetat-Vinylversatat-Copolymerdispersion 50%ig | 67,8 Gew.% |
| Kohlenstoffasern | 6,0 Gew.% |
| Harzdispersion | 15,0 Gew.% |
| Entschäumer | 0,3 Gew.% |
| Verdickungsmittel | 0,2 Gew.% |
| Netzmittel | 0,5 Gew.% |
| Hohlkörperfüllstoff | 10,2 Gew.% |

Die Klebstoffe gemäß Rezepturbeispielen 1 - 3 wurden mittels einer Zahnspachtel in einer Menge von ca. 350 g/m² auf die Rückseite von Bodenbelägen aufgetragen und dort 24 Std. bei 50 °C getrocknet. Nach einer weiteren Lagerung von 5 Tagen bei Raumtemperatur wurden die klebstoffbeschichteten Beläge in 5 cm breite Streifen geschnitten und im Mikowellenofen 15 sec. (bei Scherfestigkeit) bzw. 30 sec. (bei Schälfestigkeit) mit 720 Watt aktiviert. Die Belagstreifen wurden unmittelbar nach der Aktivierung aus dem MW-Ofen genommen und unter einem Anpreßdruck von 0,3 N/mm² mit Prüfkörpern aus Buchenholz verklebt. Nach Lagerung der verklebten Prüfkörper für 2 Tage bei Raumtemperatur wurden entsprechend DIN 53277 bzw. DIN 53278 die Schälfestigkeit bzw. die Scherfestigkeit geprüft. Danach ergaben sich mit Mittel folgende Werte :

| Belagsart | Schälfestigkeit (N/cm) | Scherfestigkeit (N/cm²) |
|---|---|---|
| Gewebter Textilbelag | 40-65 | 110-170 |
| Nadelvliesbelag | 35-50 | 150-160 |
| Gummibelag plan | 15-25 MB | 80- 90 MB |
| PVC-Testbelag | 25-55 | 75- 85 |
| Linoleum | 25-30 MB | 180-185 MB |
| MB = Materialbruch | | |

Für die Ausgestaltung des Schmelzklebstoffs als selbsttragende Folie, die universell, insbesondere zum Verkleben von elastomeren Bodenbelägen und Teppichbelägen geeignet ist, läßt sich folgendes Hotmelt- bzw. Schmelzklebstoff-Rezepturbeispiel angeben: 74 Gew.% Hotmelt, bestehend aus Ethylen-Vinylacetat-Copolymer, Harz, Wachs, Füllstoff und Additiven und 26 Gew.% Flockengraphit. Bei diesem Beispiel einer erfindungsgemäßen Schmelzklebstoffzusammensetzung ergaben Untersuchungen einen hohen Aufheizverbesserungsfaktor 330.

Die Rezepturbestandteile für die Schmelzklebstoffolie konnen je nach den Anforderungen in weiten Grenzen geändert werden.

## Ansprüche

1. Schmelzklebstoff mit wenigstens einem Bestandteil, der bei Einwirkung von Mikrowellen auf den trocknen Schmelzklebstoff zu einer erhöhten Aufheizrate gegenüber einem entsprechenden trocknen Schmelzklebstoff ohne diesen Bestandteil und dadurch zu einer höheren Aufschmelzgeschwindigkeit führt, **dadurch gekennzeichnet,**
daß als mikrowellenaktivierbarer Bestandteil elektrisch leitfähige Substanzen vorgesehen sind, deren elektrische Leitfähigkeit über der des trockenen Schmelzklebstoffs ohne diesen Bestandteil liegt.

2. Schmelzklebstoff nach Anspruch 1,
dadurch gekennzeichnet,
daß der Schmelzklebstoff ein oder mehrere thermoplastische, ggf. in an sich bekannter Weise mit Kunst- und/oder Naturharzen und/oder Additiven modifizierte Polymere als Bindemittelbasis aufweist und nach dem Auftragen aus ein zu verklebendes Material einen nach dem Trocknen bzw. Erhärten bzw. Abbinden trockenen und bei Raumtemperatur nur schwach klebenden bis klebfreien Klebstoffauftrag bildet.

3. Schmelzklebstoff nach Anspruch 1,
dadurch gekennzeichnet,
daß der Schmelzklebstoff ein oder mehrer thermoplastische, ggf. in an sich bekannter Weise mit Kunst- und/oder Naturharzen und/oder Additiven modifizierte Polymere als Bindemittelbasis aufweist und nach dem Trocknen bzw. Erhärten bzw. Abbinden als selbsttragende Folie ausgebildet ist.

4. Schmelzklebstoff nach Anspruch 3,
dadurch gekennzeichnet,
daß die Schmelzklebstoffolie Ausnehmungen aufweist.

5. Schmelzklebstoff nach Anspruch 3 oder 4,
dadurch gekennzeichnet,
daß die Schmelzklebstoffolie schwachklebend bis klebfrei ist.

6. Schmelzklebstoff nach einem der Ansprüche 3 - 5,
dadurch gekennzeichnet,
daß die Dicke der Schmelzklebstoffolie bis zu 5 mm beträgt.

7. Schmelzklebstoff nach einem der Ansprüche 3 - 6,
dadurch gekennzeichnet,
daß die Schmelzklebstoffolie bahnförmig mit einer Breite bis zu drei Metern ausgebildet ist.

8. Schmelzklebstoff nach einem der vorangehenden Ansprüche,
dadurch gekennzeichnet,
daß als elektrisch leitfähige Substanz Kohlenstoffasern vorgesehen sind.

9. Schmelzklebstoff nach Anspruch 6,
dadurch gekennzeichnet,
daß Kohlenstoffasern mit einer mittleren Länge in einem Bereich bis zu 50 mm vorgesehen sind.

10. Schmelzklebstoff nach einem der vorangehenden Ansprüche,
dadurch gekennzeichnet,
daß Kohlenstoffasern in einem Mengenanteil von 0,5 - 30 Gew.%, bezogen auf die trockene Klebstoffmasse, vorgesehen sind.

11. Schmelzklebstoff nach einem der Ansprüche 1 - 7,
dadurch gekennzeichnet,
daß als elektrisch leitfähige Substanz Ruß oder Rußpigmente vorgesehen sind.

12. Schmelzklebstoff nach Anspruch 11,
dadurch gekennzeichnet,
daß Ruß oder Rußpigmente in einem Mengenanteil von 0,5 - 20 Gew.% bezogen auf die trockene Klebstoffmasse, vorgesehen sind.

13. Schmelzklebstoff nach einem der Ansprüche 1 - 7,
dadurch gekennzeichnet,
daß als elektrisch leitfähige Substanz Graphit vorgesehen ist.

14. Schmelzklebstoff nach Anspruch 13,
dadurch gekennzeichnet,
daß Graphit in einem Mengenanteil von 2 - 40 Gew.%, bezogen auf die trockene Klebstoffmasse, vorgesehen ist.

15. Schmelzklebstoff nach einem der Ansprüche 1 - 7,
dadurch gekennzeichnet,
daß als elektrisch leitfähige Substanz Metallpartikel in Form von Pulver, Flocken, Körnern, Blättchen, Fasern o.ä vorgesehen sind.

16. Schmelzklebstoff nach Anspruch 15,
dadurch gekennzeichnet,
daß Metallpartikel in einem Mengenanteil von 1- 70 Gew.%, bezogen auf die trockene Klebstoffmasse, vorgesehen sind.

17. Schmelzklebstoff nach einem der Ansprüche 1 - 7,
dadurch gekennzeichnet,
daß als elektrisch leitfähige Substanz Antistatika vorgesehen sind.

18. Schmelzklebstoff nach Anspruch 17,
dadurch gekennzeichnet,
daß Antistatika in einem Mengenanteil von 0,5 - 20 Gew.%, bezogen auf die trockene Klebstoffmasse, vorgesehen sind.

19. Schmelzklebstoff nach einem der Ansprüche 1 - 5,
dadurch gekennzeichnet,
daß als elektrische leitfähige Substanz zwei oder mehrere der Substanzen Kohlenstoffasern, Ruß oder Rußpigmente, Graphit, Metallpartikel und Antistatika gemeinsam vorgesehen sind.

20. Schmelzklebstoff nach einem der vorangehenden Ansprüche,
dadurch gekennzeichnet,
daß als Modifizierungsmittel organische Amine in einem Mengenanteil bis zu 20 Gew.%, bezogen auf die trockene Klebstoffmasse, vorgesehen sind.

21. Schmelzklebstoff nach einem der vorangehenden Ansprüche, dadurch gekennzeichnet, daß als Modifizierungsmittel organische Ether bzw. Polyether in einem Mengenanteil bis zu 40 Gew.%, bezogen auf die trockene Klebstoffmasse, vorgesehen sind.

22. Schmelzklebstoff nach einem der vorangehenden Ansprüche,
dadurch gekennzeichnet,
daß Hohlkörperfüllstoffe mit einem mittleren Teilchendurchmesser im Bereich von 10 - 90 $\mu$m vorgesehen sind.

23. Verfahren zur Herstellung eines Schmelzklebstoffauftrags auf ein zu verklebendes Material gemäß einem der Ansprüche 2, 8-22,
dadurch gekennzeichnet,
daß der Schmelzklebstoff als Lösung bzw. Dispersion bzw. Emulsion in Wasser zubereitet und aufgetragen wird.

24. Verfahren zur Herstellung eines Schmelzklebstoffauftrags auf ein zu verklebendes Material gemäß einem der Ansprüche 2, 8 - 22,
dadurch gekennzeichnet,
daß der Schmelzklebstoff als Lösung bzw. Dispersion bzw. Emulsion in organischen Lösungsmitteln zubereitet und aufgetragen wird.

25. Verfahren zur Herstellung eines Schmelzklebstoffauftrags auf ein zu verklebendes Material gemäß einem der Ansprüche 2, 8 - 22,
dadurch gekennzeichnet,
daß der Schmelzkleber in aufgeschmolzener Form ohne flüchtiges, flüssiges Trägermedium aufgetragen wird.

26. Verfahren nach einem der Ansprüche 23 bis 25,
dadurch gekennzeichnet,
daß der Schmelzklebstoff in mechanisch geschäumter Form aufgetragen wird.

27. Verfahren nach einem der Ansprüche 23 bis 25,
dadurch gekennzeichnet,
daß der Schmelzklebstoff vor, während oder nach dem Auftragen chemisch aufgeschäumt wird.

28. Verfahren zur Herstellung einer selbsttragenden Schmelzklebstoffolie aus einem Schmelzklebstoff nach einem der Ansprüche 3 - 22,
dadurch gekennzeichnet,

daß der Schmelzklebstoff in flüssiger bzw. aufgeschmolzener Form mittels Streichen, Walzen, Spitzen, Aufsprühen oder einem anderen Auftragsverfahren ganz- oder teilflächig auf einen Zwischenträger aufgebracht und nach dem Trocknen bzw. Erhärten bzw. Abbinden vom Zwischenträger als selbsttragende Schmelzklebstoffolie gelöst wird.